# FASCICULE DE BREVET EUROPEEN

(11) **EP 3 751 083 B1**
(45) Date de publication et mention de la délivrance du brevet: **03.08.2022**
(21) Numéro de dépôt: 20177756.2
(22) Date de dépôt: 02.06.2020
(51) Int. Cl.: E05D 15/10, B60J 5/04

(54) **PORTE LATÉRALE COMPATIBLE EN POSITION OUVERTE AVEC UNE ROUE DIRECTRICE BRAQUÉE**
SEITENTÜR, DIE IM GEÖFFNETEN ZUSTAND MIT EINEM EINGESCHLAGENEN ANTRIEBSRAD KOMPATIBEL IST
SIDE DOOR COMPATIBLE IN THE OPEN POSITION WITH A TURNED STEERING WHEEL

(30) Priorité: 12.06.2019 FR 1906255
(43) Date de publication de la demande: 16.12.2020
(73) Titulaire: Renault s.a.s, 92100 Boulogne Billancourt (FR)
(72) Inventeur: LAURIE, JOHN, 78000 VERSAILLES (FR)
(74) Mandataire: Renault Group

(56) Documents cités:
- EP-A2- 1 669 231
- DE-A1-102004 007 281
- DE-A1-102006 059 978
- DE-A1-102011 117 792
- US-A- 4 544 198
- US-A1- 2016 356 069

## Description

L'invention concerne un agencement pour véhicule automobile comprenant une caisse, une roue directrice, une première porte et une deuxième porte

L'invention porte encore sur un véhicule comprenant un tel agencement. L'invention porte encore sur un procédé de fonctionnement d'un tel agencement ou d'un tel véhicule.

Un véhicule, en particulier un véhicule automobile, requiert une accessibilité optimale au sein de l'habitacle. C'est particulièrement le cas pour un véhicule automobile mutualisé c'est-à-dire utilisé par de nombreux utilisateurs à l'instar d'un moyen de transport en commun. Ainsi, pour ce type de véhicule, on souhaite disposer d'une grande ouverture dans la caisse pour faciliter l'accès des passagers à l'habitacle. Une telle ouverture est généralement obturée par un ouvrant s'étendant en position ouverte en vis-à-vis d'une roue directrice. Or, en cas d'arrêt du véhicule alors que les roues directrices sont braquées, les ouvrants ne peuvent pas s'ouvrir ou ne peuvent pas s'ouvrir intégralement sans venir buter contre une roue directrice. Une telle situation n'est pas acceptable, l'accès à l'habitacle s'en trouvant limité.

Le but de l'invention est de fournir un agencement remédiant aux inconvénients évoqués ci-dessus. En particulier, l'invention propose un agencement simple, fiable et particulièrement économique.

Pour atteindre cet objectif, l'invention porte sur un agencement pour véhicule, notamment pour véhicule automobile, selon la revendication 1.

La première zone du côté de caisse peut s'étendre au niveau de l'avant du véhicule ou la première zone peut s'étendre au niveau de l'arrière du véhicule.

L'invention porte sur un agencement tel que défini précédemment et comprenant une roue directrice apte à occuper un volume au cours des changements de direction de la roue directrice, le volume s'étendant selon la direction transversale vers l'extérieur de l'habitacle d'un tel véhicule sur une épaisseur par rapport au côté de caisse, notamment par rapport à une partie de carrosserie, le volume s'étendant selon la direction verticale sur une hauteur, notamment une hauteur égale ou sensiblement égale au diamètre de la roue directrice, le volume étant délimité par une enveloppe, et,
en position ouverte, la première porte, notamment un bord vertical et/ou un bord inférieur de la première porte, vient sensiblement tangenter l'enveloppe avec un jeu compris entre 10 mm et 40 mm.

La deuxième porte, notamment un bord avant de la deuxième porte, peut recouvrir la première porte, notamment un bord arrière de la première porte, dans une position fermée des première et deuxième portes.

L'invention porte encore sur un véhicule, notamment un véhicule automobile, comprenant un agencement tel que défini précédemment de chaque côté du véhicule.

L'invention porte encore sur un procédé de fonctionnement d'un agencement tel que défini précédemment ou d'un véhicule tel que défini précédemment comprenant un passage d'une position fermée à une position ouverte de la première porte et de la deuxième porte, le procédé comprenant une étape d'ouverture de la deuxième porte suivie d'une étape d'ouverture de la première porte.

L'invention porte encore sur un procédé de fonctionnement d'un agencement tel que défini précédemment ou d'un véhicule tel que défini précédemment comprenant un passage d'une position ouverte à une position fermée de la première porte et de la deuxième porte, le procédé comprenant une étape de fermeture de la première porte suivie d'une étape de fermeture de la deuxième porte.

Ces objets, caractéristiques et avantages de la présente invention seront exposés en détail dans la description suivante d'un mode de réalisation d'un véhicule, faite à titre non-limitatif en relation avec les figures jointes parmi lesquelles :
[Fig. 1] La figure 1 est une vue d'un véhicule automobile selon un mode de réalisation de l'invention.
[Fig. 2] La figure 2 est une autre vue du véhicule automobile selon le mode de réalisation de l'invention.
[Fig. 3] La figure 3 est une vue partielle de dessus d'un agencement du véhicule selon un mode de réalisation de l'invention.
[Fig. 4] La figure 4 est une vue en perspective d'une porte de l'agencement selon le mode de réalisation de l'invention.
[Fig. 5] La figure 5 est une autre vue partielle de dessus de l'agencement selon le mode de réalisation de l'invention.
[Fig. 6] La figure 6 est une vue en coupe partielle selon un plan transversal et longitudinal du véhicule selon le mode de réalisation de l'invention.
[Fig. 7] La figure 7 est une vue de détail en coupe selon un plan transversal et longitudinal de l'agencement selon le mode de réalisation de l'invention.

La direction selon laquelle un véhicule automobile se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule automobile se déplace habituellement dans la direction longitudinale et est opposé au sens arrière.

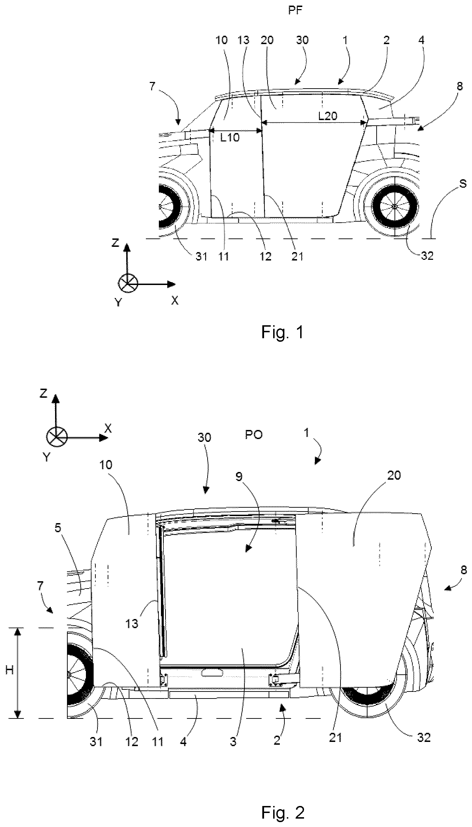

Comme illustré sur les figures 1 et 2, un véhicule selon un mode de réalisation de l'invention, par exemple un véhicule automobile 1, comprend une caisse 2.

La caisse 2 comprend un agencement 30. L'agencement 30 comprend un côté de caisse 4 dans lequel est ménagée une ouverture 3. De préférence, la caisse, et par conséquent le véhicule, comprend un agencement de chaque côté du véhicule, à savoir côté droit (non illustré) et côté gauche. Dans ce cas, une ouverture est ménagée dans chaque côté de caisse. Le côté de caisse 4 comprend une première zone 7, de préférence à l'avant ou au niveau de l'avant du côté de caisse 4. Le côté de caisse 4 comprend une deuxième zone 8, de préférence à l'arrière ou au niveau de l'arrière du côté de caisse 4.

L'agencement 30 comprend encore une première porte 10 et une deuxième porte 20. La première et la deuxième portes sont destinées à fermer l'ouverture 3 en position fermée PF, comme illustré sur la figure 1.

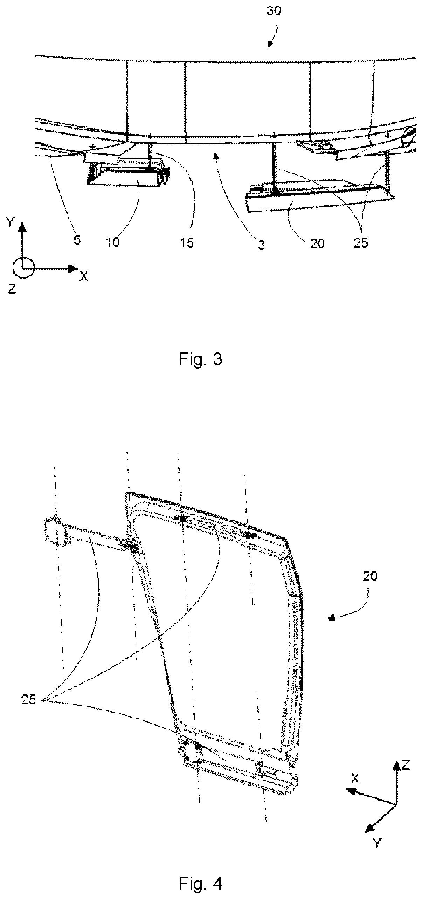

La première porte 10 et la deuxième porte 20 sont montées mobiles relativement à leur côté de caisse 4. Les première et deuxième portes sont guidées pour se déplacer chacune sensiblement parallèlement à elle-même lors de ses mouvements d'ouverture et/ou de fermeture. Ce guidage pour l'ouverture et la fermeture comprend par exemple un ou plusieurs systèmes à rails et/ou un ou plusieurs systèmes à bielles 25, comme illustré sur la figure 4 pour une deuxième porte 20.

La première porte 10 est agencée pour s'ouvrir vers la première zone 7 du côté de caisse 4. La première zone 7 est destinée à recevoir une roue directrice 31. La première porte 10 comprend par exemple un bord 11 vertical ou sensiblement vertical, notamment disposé à l'avant. La première porte 10 comprend de préférence encore un bord inférieur 12, disposé en bas de la première porte, par exemple parallèle ou sensiblement parallèle au sol. La première porte comprend encore de préférence un bord arrière 13 vertical ou sensiblement vertical, notamment agencé à l'arrière de la première porte 10.

La deuxième porte 20 est agencée pour s'ouvrir vers la deuxième zone 8 du côté de caisse 4. La deuxième zone 8 est destinée à recevoir une roue non-directrice 32. Alternativement, la roue 32 peut être une roue faiblement directrice pour faciliter le déplacement du véhicule. La deuxième porte 20 comprend de préférence un bord 21 vertical ou sensiblement vertical agencé à l'avant de la deuxième porte 20. Par « roue non-directrice », on entend une roue qui ne peut tourner qu'autour de son axe de rotation principal ou sensiblement autour de son axe de rotation principal sans pivotement permettant d'orienter ou modifier la trajectoire du véhicule. Par « roue faiblement directrice », on entend une roue apte à pivoter autour d'un axe vertical ou sensiblement vertical. Une telle roue permet par exemple de modifier légèrement la trajectoire du véhicule et/ou permet d'améliorer l'adhérence du véhicule par rapport au sol, en particulier au cours de virages. Une roue faiblement directrice se différencie d'une roue directrice en ce qu'indépendamment de la position angulaire d'axe vertical ou sensiblement vertical, la roue faiblement directrice n'interfère pas avec le chemin de déplacement d'un ouvrant.

La première porte 10 a une première largeur L10. Cette première largeur L10 est par exemple la longueur maximale de la première porte selon la direction longitudinale, notamment en position fermée.

La deuxième porte 20 a une deuxième largeur L20. Cette deuxième largeur L20 est par exemple la longueur maximale de la deuxième porte selon la direction longitudinale, notamment en position fermée.

La première largeur L10 est inférieure à la deuxième largeur L20. Selon l'invention, la deuxième largeur L20 de la deuxième porte 20 est comprise entre 1.5 fois et 2.5 fois, la première largeur L10 de la première porte 10. De préférence, la deuxième largeur L20 de la deuxième porte 20 vaut environ 2 fois la première largeur L10 de la première porte 10.

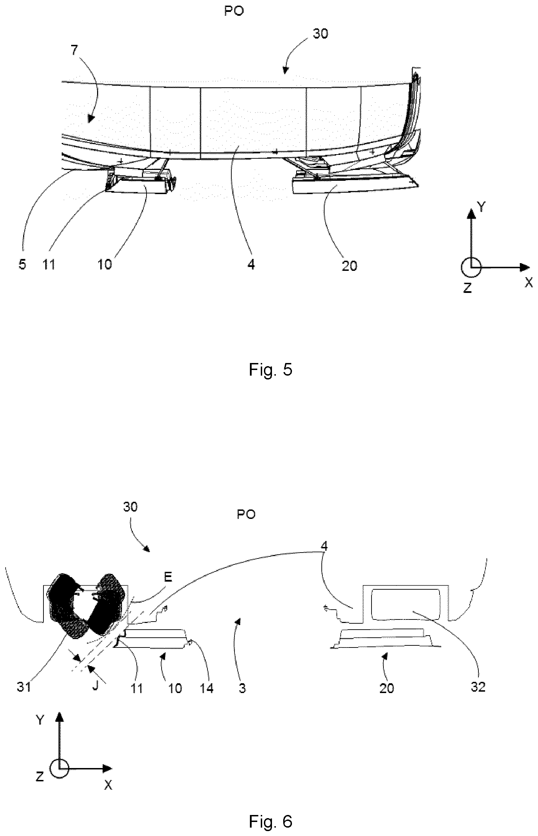

De préférence, comme illustré sur les figures 2 et 5, la première zone 7 du côté de caisse 4 s'étend au niveau de l'avant du véhicule. En cas de véhicule à quatre roues dont deux sont directrices à l'avant, une roue directrice est agencée côté droit et l'autre agencée côté gauche. Une roue non-directrice gauche est alors agencée au niveau de la deuxième zone gauche s'étendant à l'arrière du véhicule, une roue non-directrice droite étant alors agencée au niveau de la deuxième zone droite.

Alternativement, par exemple en cas de roues directrices agencées à l'arrière du véhicule, la première zone s'étend au niveau de l'arrière du véhicule (non illustré). La deuxième zone s'étend alors au niveau de l'avant du véhicule et les roues non-directrices sont agencées à ce niveau.

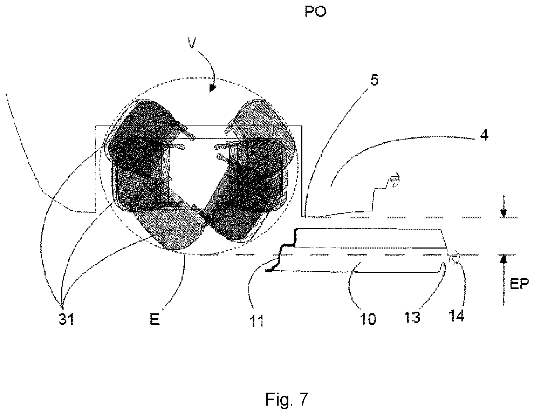

L'agencement comprend la roue directrice 31. Comme illustré sur la figure 7, une roue directrice est apte à occuper un volume V au cours de ses pivotements afin de permettre des changements de trajectoire et/ou de direction au véhicule. Ces pivotements sont assurés autour d'un axe vertical ou sensiblement vertical (non représenté). Le volume V s'étend selon la direction transversale, vers l'extérieur de l'habitacle 9. Ce volume V s'étend par exemple sur une épaisseur EP par rapport au côté de caisse 4, ou encore par rapport à une partie de carrosserie 5 du véhicule. Par exemple la partie de carrosserie 5 est une aile avant. Par exemple, cette partie de carrosserie 5 est supportée, au moins partiellement, par le côté de caisse 4. Comme illustré sur la figure 2, le volume V s'étend encore selon la direction verticale sur une hauteur H, notamment une hauteur H égale ou sensiblement égale au diamètre de la roue directrice. En outre, le volume V est délimité par une enveloppe E illustrée en pointillés sur les figures 6 et 7.

En position ouverte PO, illustrée en particulier sur les figures 5, 6 et 7, la première porte 10, par exemple le bord vertical 11 disposé à l'avant et/ou le bord inférieur 12, vient sensiblement tangenter l'enveloppe E avec un jeu J compris entre 10 mm et 40 mm, comme illustré sur la figure 6.

A noter que le bord avant 11 vertical ou sensiblement vertical, à l'avant de la première porte dans le mode de réalisation illustré, comprend par exemple selon la direction transversale, le bord avant de la carrosserie de la première porte et/ou le bord avant d'une doublure en tôle par exemple et/ou le bord avant d'un habillage intérieur de la première porte, comme illustré en gras sur les figures 6 et 7. Le bord inférieur 12 comprend par exemple, selon la direction transversale, le bord inférieur de la carrosserie de la première porte et/ou le bord inférieur d'une doublure en tôle par exemple et/ou le bord inférieure d'un habillage intérieur de la première porte. Dans un but de simplification, la jonction ou rayon de courbure (non illustrée) entre le bord avant 11 et le bord inférieur 12 fait partie du bord avant 11.

De préférence, en position fermée PF des deux portes latérales 10, 20, illustrée sur la figure 1, la deuxième porte 20 recouvre une partie de la première porte 10. Plus précisément, de préférence le bord avant 21 de la deuxième porte 20 recouvre, au moins partiellement, le bord arrière 13 de la première porte.

La mise en œuvre d'un mode d'exécution d'un procédé de fonctionnement de l'agencement 30 va maintenant être décrite.

En cas de véhicule automobile 1 ayant les portes fermées, pour accéder aisément au sein de l'habitacle 9, il convient d'ouvrir les première et deuxièmes portes 10, 20. Pour cela le procédé de fonctionnement de l'agencement 30 comprend un passage de la position fermée PF (figure 1) à la position ouverte PO (figures 2, 5, 6 et 7) des première et deuxième portes 10, 20. Pour parvenir à ce changement d'état des portes, le procédé comprend une étape d'ouverture de la deuxième porte 20 dans un premier temps. Dans un second temps, suivant le premier temps, le procédé comprend une étape d'ouverture de la première porte 10. Ainsi, le bord arrière 13 de la première porte 10, au moins partiellement agencé contre le bord avant 21 de la deuxième porte 20 selon la direction transversale, n'est pas gêné pour se dégager vers l'extérieur de l'habitacle 9.

A l'inverse, le procédé de fonctionnement de l'agencement 30 comprend un passage de la position ouverte PO à la position fermée PF des première et deuxième portes. Pour parvenir à ce changement d'état des portes, le procédé comprend une étape de fermeture de la première porte 10 dans un troisième temps. Dans un quatrième temps, suivant le troisième temps, le procédé comprend une étape de fermeture de la deuxième porte 20. Ainsi le bord avant 21 de la deuxième porte 20 peut venir recouvrir, au moins partiellement, le bord arrière 13 de la première porte 10.

Grâce à la première porte 10 s'ouvrant de préférence vers l'avant du côté de caisse 4 et à la deuxième porte s'ouvrant vers l'arrière du côté de caisse 4, l'accessibilité vers l'habitacle 9 est excellente quel que soit l'angle de braquage de la roue directrice 31. En cas de véhicule automobile 1 mutualisé, à l'instar d'un moyen de transport en commun, les places principales sont au deuxième rang, c'est-à-dire que ce sont les places arrière, l'agencement en facilite l'accès. L'accessibilité demeure également optimale pour les places avant le cas échéant. La répartition de la largeur de l'ouverture 3 selon la direction longitudinale, à savoir de l'ordre d'un tiers pour la première porte et de deux tiers pour la deuxième porte améliore l'accessibilité à l'habitacle.

Dans la position ouverte PO, la largeur d'accès équivaut à la distance selon la direction longitudinale entre le bord avant 21 de la porte arrière 20 et le bord arrière 13 de la porte avant 10. De préférence, cette largeur d'accès est diminuée de l'épaisseur, selon la direction longitudinale, d'un joint d'étanchéité 14 fixé au niveau du bord arrière 13, comme illustré sur les figures 6 et 7.

Comme évoqué précédemment, dans le mode de réalisation illustré, seules les deux roues avant, une roue avant droite et une roue avant gauche, sont directrices et permettent de diriger le véhicule. Les roues arrière 32, une roue arrière droite et une roue arrière gauche, ne sont pas directrices ou sont seulement faiblement directrices. Ainsi, le recul de la deuxième porte 20 lors de l'ouverture au niveau des roues 32 est sans conséquence, même si la deuxième porte se retrouve en vis-à-vis, ou sensiblement en vis-à-vis, de l'intégralité d'une roue 32 comme illustré sur les figures 2 et 6.

Ainsi lors du déplacement vers l'avant de la première porte 10 pour l'ouverture, la première porte n'interfère pas avec le pneu de la roue et/ou la jante de la roue directrice 31, même en position d'ouverture maximale. Autrement dit, bien que la roue directrice occupe le volume V lors des braquages et/ou changements de direction dépassant d'une épaisseur EP selon la direction transversale par exemple par rapport à l'aile avant du véhicule, les portes peuvent être intégralement ouvertes quel que soit l'angle de braquage de la roue directrice. En effet, le bord arrière du pneu de la roue directrice 31 étant contenu dans le volume V, autrement dit ne dépassant pas l'enveloppe E, aucun contact ne peut avoir lieu entre le pneu et/ou la jante de la roue 31 et le bord avant 11 ou encore le bord inférieur 12 de la première porte 10. Ainsi la position ouverte PO de la première porte est telle que la première porte 10 est située derrière l'enveloppe E formée par toutes les positions possibles de la roue directrice 31.

Comme évoqué précédemment, dans la position fermée PF, la porte arrière 20 est en recouvrement avec la porte avant 10. Cet aspect est particulièrement intéressant pour répondre à des problématiques d'étanchéité et de tenue mécanique en cas de choc latéral. De préférence, la porte avant 10 est donc fermée avant la porte arrière 20 et la porte arrière 20 est donc ouverte avant la porte avant 10.

A noter que le choix d'une position de « découpe » entre les portes avant et arrière avec un ratio d'environ un tiers / deux tiers implique, en cas de systèmes d'ouverture /fermeture dotés de bielles 15, 25, que les bielles 15 de la première porte 10 soient moins longues que les bielles 25 de la deuxième porte 20 comme illustré tout particulièrement sur la figure 3. Sur cette figure 3 les première et deuxième portes sont illustrées partiellement ouvertes ou partiellement fermées, leurs bielles 15, 25 s'étendant transversalement ou sensiblement transversalement.

A noter qu'étant donné ces différences de longueurs de bielles, la course longitudinale entre la position fermée PF et la position ouverte PO de la première porte est moins importante que la course longitudinale entre la position fermée PF et la position ouverte PO de la deuxième porte.

En résumé, si le véhicule est arrêté avec les roues directrices 31 braquées, par exemple contre un trottoir et/ou dans un virage, l'ouverture des portes demeure possible. En effet, l'agencement 30 permet d'éviter toute interférence entre la première porte et la roue directrice adjacente à la première porte, même si cette roue directrice est braquée. Ainsi, il n'est pas utile de perdre du temps et/ou de l'énergie pour mettre les roues directrices sans ou sensiblement sans braquage avant d'ouvrir les portes.

A noter que la deuxième porte étant plus large que la première porte, l'accès aux places du deuxième rang, c'est-à-dire aux places principales pour un véhicule mutualisé, est favorisé. En complément, il peut éventuellement être possible d'accéder aux places de deuxième rang ou arrière en ouvrant seulement la ou les deuxièmes portes. Ceci est particulièrement avantageux dans le cas de mauvaises conditions météorologiques par exemple. En outre, en cas d'urgence, une deuxième porte plus large que la première porte est préférable. En effet, en cas de nécessité d'évacuer rapidement le véhicule, cela permet de n'avoir à déverrouiller que la deuxième porte tout en offrant une largeur d'ouverture conséquente aussi bien pour les occupants installés à l'arrière que pour ceux installés à l'avant.

Enfin, l'encombrement selon la direction transversale des première et deuxième portes en position ouverte PO est particulièrement optimisé, c'est-à-dire faible, tout en autorisant tous les angles de braquage des roues directrices.

En résumé, le mode de réalisation de cet agencement 30 est simple, robuste et particulièrement économique.

En remarque, la solution atteint donc l'objectif recherché de pouvoir ouvrir les portes vers l'avant d'un véhicule tout en ayant les roues directrices braquées et présente les avantages suivants :
- Elle peut être appliquée à tous les types de véhicules automobiles, quelle que soit leur gamme.

## Revendications

1. Agencement (30) pour véhicule, notamment pour véhicule automobile (1), comprenant :
- un côté de caisse (4) dans lequel est ménagée une ouverture (3),
- une roue directrice (31) apte à occuper un volume (V) au cours des changements de direction de la roue directrice (31),
- une première porte (10) et une deuxième porte (20) destinées à fermer l'ouverture (3), la première porte (10) et la deuxième porte (20) étant montées mobiles relativement au côté de caisse (4) de sorte à être guidées pour se déplacer chacune sensiblement parallèlement à elle-même lors de ses mouvements d'ouverture et/ou de fermeture, la première porte (10) étant agencée pour s'ouvrir vers une première zone (7) du côté de caisse (4) destinée à recevoir la roue directrice (31) et la deuxième porte (20) étant agencée pour s'ouvrir vers une deuxième zone (8) du côté de caisse (4) destinée à recevoir une roue non-directrice (32),
le volume (V) s'étendant selon la direction transversale vers l'extérieur de l'habitacle (9) d'un tel véhicule sur une épaisseur (EP) par rapport au côté de caisse (4), notamment par rapport à une partie de carrosserie (5), le volume (V) s'étendant selon la direction verticale sur une hauteur (H), notamment une hauteur (H) égale ou sensiblement égale au diamètre de la roue directrice (31), le volume (V) étant délimité par une enveloppe (E), **caractérisé en ce que** la première largeur (L10) de la première porte (10) est inférieure à la deuxième largeur (L20) de la deuxième porte (20), notamment la deuxième largeur (L20) de la deuxième porte (20) est comprise entre 1.5 fois et 2.5 fois, la première largeur (L10) de la première porte (10), en particulier la deuxième largeur (L20) de la deuxième porte (20) vaut environ 2 fois la première largeur (L10) de la première porte (10), et **en ce qu'**en position ouverte (PO), la première porte (10), notamment un bord vertical (11) et/ou un bord inférieur (12) de la première porte (10), vient sensiblement tangenter l'enveloppe (E) avec un jeu (J) compris entre 10 mm et 40 mm.

2. Agencement (30) selon la revendication précédente, **caractérisé en ce que** la première zone (7) du côté de caisse (4) s'étend au niveau de l'avant du véhicule ou **en ce que** la première zone (7) s'étend au niveau de l'arrière du véhicule.

3. Agencement (30) selon l'une des revendications précédentes, **caractérisé en ce que** la deuxième porte (20), notamment un bord avant (21) de la deuxième porte (20), recouvre la première porte (10), notamment un bord arrière (13) de la première porte (10), dans une position fermée (PF) des première et deuxième portes (10 ; 20).

4. Véhicule, notamment véhicule automobile (1), **caractérisé en ce qu'**il comprend un agencement (30) selon l'une des revendications précédentes de chaque côté du véhicule.

5. Procédé de fonctionnement d'un agencement (30) selon l'une des revendications 1 à 3 ou d'un véhicule selon la revendication 4 comprenant un passage d'une position fermée (PF) à une position ouverte (PO) de la première porte (10) et de la deuxième porte (20), **caractérisé en ce que** le procédé comprend une étape d'ouverture de la deuxième porte (20) suivie d'une étape d'ouverture de la première porte (10).

6. Procédé de fonctionnement d'un agencement (30) selon l'une des revendications 1 à 3 ou d'un véhicule selon la revendication 4 comprenant un passage d'une position ouverte (PO) à une position fermée (PF) de la première porte (10) et de la deuxième porte (20), **caractérisé en ce que** le procédé comprend une étape de fermeture de la première porte (10) suivie d'une étape de fermeture de la deuxième porte (20).

## Patentansprüche

1. Anordnung (30) für ein Fahrzeug, insbesondere für ein Kraftfahrzeug (1), beinhaltend:
- eine Karosserieseite (4), in der eine Öffnung (3) eingebracht ist,
- ein lenkbares Rad (31), das dazu fähig ist, während der Richtungsänderungen des lenkbaren Rades (31) ein Volumen (V) einzunehmen,
- eine erste Tür (10) und eine zweite Tür (20), die dazu bestimmt sind, die Öffnung (3) zu schließen, wobei die erste Tür (10) und die zweite Tür (20) relativ zu der Karosserieseite (4) so bewegbar montiert sind, dass sie geführt werden, um sich während ihrer Öffnungs- und/oder Schließbewegungen jeweils im Wesentlichen parallel zu sich selber zu verschieben, wobei die erste Tür (10) dazu angeordnet ist, sich zu einer ersten Zone (7) der Karosserieseite (4) hin zu öffnen, welche dazu bestimmt ist, das lenkbare Rad (31) aufzunehmen, und die zweite Tür (20) dazu angeordnet ist, sich zu einer zweiten Zone (8) der Karosserieseite (4) hin zu öffnen, welche dazu bestimmt ist, ein nicht lenkbares Rad (32) aufzunehmen, wobei sich das Volumen (V) gemäß der Querrichtung zur Außenseite der Fahrgastzelle (9) eines solchen Fahrzeugs hin über eine Dicke (EP) in Bezug auf die Karosserieseite (4), insbesondere in Bezug auf einen Karosserieteil (5), erstreckt, wobei sich das Volumen (V) gemäß der vertikalen Richtung über eine Höhe (H) erstreckt, insbesondere eine Höhe (H), die gleich oder im Wesentlichen gleich dem Durchmesser des lenkbaren Rades (31) ist, wobei das Volumen (V) durch eine Einhüllende (E) begrenzt wird, **dadurch gekennzeichnet, dass** die erste Breite (L10) der ersten Tür (10) kleiner als die zweite Breite (L20) der zweiten Tür (20) ist, insbesondere die zweite Breite (L20) der zweiten Tür (20) das 1,5-fache bis 2,5-fache der ersten Breite (L10) der ersten Tür (10) beträgt, genauer gesagt die zweite Breite (L20) der zweiten Tür (20) ungefähr das 2-fache der ersten Breite (L10) der ersten Tür (10) beträgt, und dass in der geöffneten Position (PO) die erste Tür (10), insbesondere ein vertikaler Rand (11) und/oder ein unterer Rand (12) der ersten Tür (10), die Einhüllende (E) mit einem Spiel (J) zwischen 10 mm und 40 mm im Wesentlichen tangiert.

2. Anordnung (30) nach dem vorhergehenden Anspruch, **dadurch gekennzeichnet, dass** sich die erste Zone (7) der Karosserieseite (4) im vorderen Bereich des Fahrzeugs erstreckt oder dass sich die erste Zone (7) im hinteren Bereich des Fahrzeugs erstreckt.

3. Anordnung (30) nach einem der vorhergehenden Ansprüche, **dadurch gekennzeichnet, dass** die zweite Tür (20), insbesondere ein vorderer Rand (21) der zweiten Tür (20), in einer geschlossenen Position (PF) der ersten und der zweiten Tür (10; 20) die erste Tür (10), insbesondere einen hinteren Rand (13) der ersten Tür (10), abdeckt.

4. Fahrzeug, insbesondere ein Kraftfahrzeug (1), **dadurch gekennzeichnet, dass** es auf jeder Seite des Fahrzeugs eine Anordnung (30) nach einem der vorhergehenden Ansprüche beinhaltet.

5. Betriebsverfahren für eine Anordnung (30) nach einem der Ansprüche 1 bis 3 oder für ein Fahrzeug nach Anspruch 4, beinhaltend ein Übergehen der ersten Tür (10) und der zweiten Tür (20) von einer geschlossenen Position (PF) in eine geöffnete Position (PO), **dadurch gekennzeichnet, dass** das Verfahren einen Schritt des Öffnens der zweiten Tür (20), gefolgt von einem Schritt des Öffnens der ersten Tür (10), beinhaltet.

6. Betriebsverfahren für eine Anordnung (30) nach einem der Ansprüche 1 bis 3 oder für ein Fahrzeug nach Anspruch 4, beinhaltend ein Übergehen der ersten Tür (10) und der zweiten Tür (20) von einer geöffneten Position (PO) in eine geschlossene Position (PF), **dadurch gekennzeichnet, dass** das Verfahren einen Schritt des Schließens der ersten Tür (10), gefolgt von einem Schritt des Schließens der zweiten Tür (20), beinhaltet.

## Claims

1. Arrangement (30) for a vehicle, in particular for a motor vehicle (1), comprising:
- a body shell side (4) in which an opening (3) is created,
- a steered wheel (31) which can occupy a volume (V) as the steered wheel (31) changes direction,
- a first door (10) and a second door (20) that are designed to close the opening (3), the first door (10) and the second door (20) being mounted so as to be able to move relative to the body shell side (4) such that they are guided so as to each move substantially parallel to themselves during its opening and/or closing movements, the first door (10) being arranged so as to open towards a first region (7) of the of the body shell side (4) that is intended to receive the steered wheel (31) and the second door (20) being arranged so as to open towards a second region (8) of the body shell side (4) that is intended to receive a non-steered wheel (32),
the volume (V) extending in the transverse direction towards the outside of the cabin (9) of such a vehicle over a thickness (EP) with respect to the body shell side (4), in particular with respect to a bodywork part (5), the volume (V) extending in the vertical direction over a height (H), in particular a height (H) that is equal or substantially equal to the diameter of the steered wheel (31), the volume (V) being delimited by an envelope (E),
**characterized in that** the first width (L10) of the first door (10) is smaller than the second width (L20) of the second door (20), in particular the second width (L20) of the second door (20) is between 1.5 times and 2.5 times the first width (L10) of the first door (10), in particular the second width (L20) of the second door (20) is approximately 2 times the first width (L10) of the first door (10),
and **in that** in the open position (PO), the first door (10), in particular a vertical edge (11) and/or a lower edge (12) of the first door (10) comes to be substantially tangential to the envelope (E) with a clearance (J) of between 10 mm and 40 mm.

2. Arrangement (30) according to the preceding claim, **characterized in that** the first region (7) of the body shell side (4) extends level with the front of the vehicle, or **in that** the first region (7) extends level with the rear of the vehicle.

3. Arrangement (30) according to either of the preceding claims, **characterized in that** the second door (20), in particular a front edge (21) of the second door (20), covers the first door (10), in particular a rear edge (13) of the first door (10), in a closed position (PF) of the first and second doors (10; 20).

4. Vehicle, in particular motor vehicle (1), **characterized in that** it comprises an arrangement (30) according to one of the preceding claims on either side of the vehicle.

5. Process for operation of an arrangement (30) according to one of Claims 1 to 3, or of a vehicle according to Claim 4, in which the first door (10) and the second door (20) pass from a closed position (PF) to an open position (PO), **characterized in that** the process comprises a step of opening the second door (20) followed by a step of opening the first door (10).

6. Process for operation of an arrangement (30) according to one of Claims 1 to 3, or of a vehicle according to Claim 4, in which the first door (10) and the second door (20) pass from an open position (PO) to a closed position (PF), **characterized in that** the process comprises a step of closing the first door (10) followed by a step of closing the second door (20).
